# EUROPEAN PATENT APPLICATION

(11) **EP 4 793 041 A1**
(43) Date of publication of application: **19.08.2026**
(21) Application number: 25733594.3
(22) Date of filing: 20.06.2025
(51) Int. Cl.: B32B 27/30, B32B 33/00, E04F 15/10

(54) **CERAMIC TILE-LOOK STONE PLASTIC FLOOR, AND MANUFACTURING METHOD THEREFOR**

(30) Priority: 30.12.2024 CN 202411965410; 15.05.2025 CN 202510628005
(71) Applicant: Changzhou Bemate Home Technology Co., Ltd., Changzhou City, Jiangsu 213100 (CN)
(72) Inventor: XU, Hongkai, Changzhou, Jiangsu 213100 (CN); LI, Yanhui, Changzhou, Jiangsu 213100 (CN); DONG, Junxiang, Changzhou, Jiangsu 213100 (CN)
(74) Representative: Vitina, Maruta
(86) International application number: PCT/CN2025/102511
(87) International publication number: WO 2026/144019

(57) **Abstract**

A marble tile-imitating stone plastic composite (SPC) floorboard includes a wear-resistant layer, a decoration layer, a first SPC substrate layer, a second SPC substrate layer being a foamed SPC layer and a third SPC substrate layer. The wear-resistant layer, the decoration layer, the first SPC substrate layer, the second SPC substrate layer and the third SPC substrate layer are arranged in sequence from top to bottom. The first SPC substrate layer includes 12-20 wt.% of a polyvinyl chloride (PVC) resin, 12-20 wt.% of a silicone-modified acrylic resin and 50-70 wt.% of calcium carbonate. The floorboard is provided with a groove recessing downward from the wear-resistant layer, and a lowest point of the groove is not lower than a middle point of the first SPC substrate layer along a thickness direction of the first SPC substrate layer. The groove is configured to imitate a tile grout aesthetic effect.

## Description

### TECHNICAL FIELD

This application relates to composite floorboards, and more particularly to a marble tile-imitating stone plastic composite (SPC) floorboard and a preparation method thereof.

### BACKGROUND

Marble imitation tiles have gained considerable attention in the field of building decoration materials due to their elegant appearance and excellent durability. However, traditionalmarble imitation tiles struggle with heavy weight, complex installation and high cost. Besides,there will be a gap between adjacent tiles during the tile laying process, and it is often required to fill the gap with a grout. The grout is essentially an adhesive substance involving various chemical components. Owing to different thermal expansion and contraction coefficients of the groutand the tile body, the grout may suffer from aging and failure after the long-term exposure. Moreover, due to the presence of specification difference and manual errors, it is difficult to achieve the even laying of the tiles.

The commercial demands for alternative materials with aesthetic appearance,light weight and easy installation are growing.

Stone plastic composite (SPC) floorboard, as an emerging floorboard material, has attracted extensive attention. The SPC floorboard is a composite board made by high-temperature extrusion of an even stone powder and thermoplastic polymer material mixture.

However, the SPC floorboard fails to offer diverse decoration effects, and thus fails to satisfy the high-end decoration demands. Therefore, it is of great significance to develop a multi-layer co-extruded SPC floorboard integrating an elegant appearanceimitating the marble tile and outstanding performances of the SPC floorboard.

### SUMMARY

In order to overcome at least one of disadvantages in the prior art, this application provides a marble tile-imitating stone plastic composite (SPC) floorboard and a preparation method thereof.

Technical solutions of this application are described as follows.

A marble tile-imitating stone plastic composite (SPC) floorboard, comprising:
a wear-resistant layer;
a decoration layer;
a first SPC substrate layer;
a second SPC substrate layer being a foamed SPC layer; and
a third SPC substrate layer;
wherein the wear-resistant layer, the decoration layer, the first SPC substrate layer, the second SPC substrate layer and the third SPC substrate layer are arranged in sequence from top to bottom;
the first SPC substrate layer comprises 12-20 wt.% of a first polyvinyl chloride (PVC) resin, 12-20 wt.% of a first silicone-modified acrylic resin and 50-70 wt.% ofcalcium carbonate; and a rest component of the first SPC substrate layer comprises a first auxiliary and a first functional additive; and
the marble tile-imitating SPC floorboard is provided with a grooveconfigured to recess downward from the wear-resistant layer, and a lowest point of the groove is not lower than a middle point of the first SPC substrate layer along a thickness direction of the first SPC substrate layer; and the groove is configured to imitate a tile grout aesthetic effect.

In an embodiment, the third SPC substrate layer comprises 12-20 wt.% of a second PVC resin, 12-20 wt.% of a second silicone-modified acrylic resin and 50-70 wt.% ofcalcium carbonate, and a rest component of the third SPC substrate layer comprises a second auxiliary and a second functional additive.

In an embodiment, raw materials ofthe first SPC substrate layer comprises:
20-30 parts by weight of the first PVC resin;
80-110parts by weight ofcalcium carbonate;
2-4 parts by weight of a first calcium-zinc stabilizer;
2-4parts by weight ofacrylic copolymer (ACR);
2-4parts by weight of a firsttoughening agent;
0.5-3parts by weight of a first internal lubricant;
0.5-3parts by weight ofa first external lubricant;
0.1-0.5parts by weight ofcarbon black; and
20-30parts by weight of the first silicone-modified acrylic resin; and
raw materials ofthe third SPC substrate layer comprises:
20-30 parts by weight ofthe second PVC resin;
80-110parts by weight ofcalcium carbonate;
2-4 parts by weight of a second calcium-zinc stabilizer;
2-4parts by weight ofACR;
2-4parts by weight of a secondtoughening agent;
0.5-3parts by weight of a second internal lubricant;
0.5-3parts by weight ofa second external lubricant;
0.1-0.5parts by weight ofcarbon black; and
20-30 parts by weight of the second silicone-modified acrylic resin.
20-31 In an embodiment, raw materials of each of the first silicone-modified acrylic resin and the second silicone-modified acrylic resincomprise a silicone monomer and an epoxy acrylic resin;
wherein the silicone monomer accounts for 10%-50% of a total weight of the silicone monomer and the epoxy acrylic resin, preferably 20-40%, and further preferably 30%-40%; and/or
the first silicone-modified acrylic resin and the second silicone-modified acrylic resin each has a viscosity of thesilicone-modified acrylic resin of 1000-2000 mPa·s.

In an embodiment, the decoration layer has at least one of a wood texture, a marble texture, a granite texture, a cloth texture, a carpet texture, a cement texture and a metal texture; preferably, the decoration layer has the marble texture.

In an embodiment, raw materials of the second SPC substrate layer comprises:
40-60 parts by weight of a third PVC resin;
70-100parts by weight of calcium carbonate;
30-60 parts by weight of a foaming recycled material;
3-5 parts by weight of a third calcium-zinc stabilizer;
1-3 parts by weight of ACR;
5-10 parts by weight of a foamingregulator;
0.1-0.5 part by weight of a yellow foaming agent;
0.1-0.3part by weight of awhite foaming agent;
0.5-3parts by weight of a third internal lubricant; and
0.5-3 parts by weight of a third external lubricant.
0.5-4 In an embodiment, an ultraviolet curable coating (UV) layer is provided above the wear-resistant layer; and/or
a sound-absorbing layer is provided below the third SPC substrate layer.

In an embodiment, a thickness of the first SPC substrate layer is 0.8-1.2 mm; a thickness of the second SPC substrate layer is 3.2-12.0 mm; and a thickness of the third SPC substrate layer is 0.8-1.2 mm; and/or
the first SPC substrate layer, the second SPC substrate layerand the third SPC substrate layer are prepared through coextrusion.

In an embodiment, the groove is formed through planing.

In an embodiment, the groove has a width of 1.5-5 mm, preferably 2-3 mm.

A method for preparing a marble tile-imitating stone plastic composite (SPC) floorboard, comprising:
(S1) mixing raw materials ofa first SPC substrate layer under heating to produce a first mixture, mixing raw materials of a second SPC substrate layer under heating to produce a second mixture, and mixing raw materials of a third SPC substrate layer under heating to produce a third mixture, wherein the second SPC substrate layer is a foamed SPC substrate layer;
(S2) transferring the first mixture, the second mixture and the third mixture to an extruder, respectively;
(S3) injecting the second mixture to a mold through a center flow channel of a merging core; injecting the first mixture to the mold through a first side flow channel of the merging core, and injecting the third mixture to the mold through a second side flow channel of the merging core; and performing, by a distributor, co-extrusion to produce a three-layer crude plate, wherein a top layer of the three-layer crude plate is the first SPC substrate layer, a middle layer of the three-layer crude plate is the second SPC substrate layer, and a bottom layer of the three-layer crude plate is the third SPC substrate layer;
(S4) forming a decoration layer on the first SPC substrate layer; and forming a wear-resistant layer on the decoration layer;
(S5) coating an ultraviolet (UV) curable transparent coating on the wear-resistant layer to form an ultraviolet curable coating (UV) layer, so as to produce a crude SPC floorboard;
(S6) patterning an upper surface of the crude SPC floorboard through a plate roller; and
(S7) subjecting the crude SPC floorboard to planing to form a groove with a tile grout aesthetic effect, so as to produce the marble tile-imitating SPC floorboard, wherein the planing is performed on the UV layer, the wear-resistant layer, the decoration layer and a part of the first SPC substrate layer, and a lowest point of the groove is not lower than a middle point of the first SPC substrate layer along a thickness direction of the first SPC substrate layer.

This application has the following beneficial effects.
(1) This application realizes lightweighting. This application obtains an A-B-A lightweight SPC substrate with the first SPC substrate layer-second SPC substrate layer-third SPC substrate layer structure, which significantly reduces the weight of the floorboard, reduces costs of transportation and mounting, and improves user experience. A conventional SPC floorboard has a density of 1.9-2.1g/cm³. The SPC floorboard of the present disclosure has a density of 1.4-1.6 g/cm³, which has a weight reduction of 20-30%.
(2) This application improves decoration effect. The tile grout aesthetic effect is formed through a high-definition printing technology and a transparent wear-resistant layer, followed by planing, and a realistic marble-pattern is realized on the SPC floorboard of the present disclosure, which meets high-end decoration demands.
(3) The silicone-modified acrylic resin is added into the first SPC substrate layer and the third SPC substrate layer, which effectively improves performances of weather resistance, water resistance, wear resistance and stain resistance of the first SPC substrate layer, the third SPC substrate layerand the groove.
(4)This application simplifies mounting process. This application adopts a lockable mounting design without needs of auxiliary materials, simplifies mounting process, and shortens construction period.
(5) This application enhances environmental protection. This application uses recyclable environmentally-friendly materials, which reduces energy consumption in the production process, and conforms to green buildingstandard.
(6) This application optimizes comprehensive performances. This application obtains the A-B-A lightweight SPC substrate through co-extrusion, and makes the decoration layer, the first SPC substrate layer, the third SPC substrate layer and the sound-absorbing layer closely combine, which provides wear resistance, stain resistance, sound insulation and comfort to meet demands of the use of high-end places.

### BRIEF DESCRIPTION OF THE DRAWINGS

Fig. 1 is a schematic diagram of a groove of a marble tile-imitating stone plastic composite (SPC) floorboard according to an embodiment of the present disclosure, where the groove is formed at the side where the male groove is located.
Fig. 2 is an enlarged view of portion "A" in Fig. 1.
Fig. 3is a schematic diagram of the groove of the marble tile-imitating stone plastic composite (SPC) floorboard according to an embodiment of the present disclosure, where the groove is formed at the side where the female groove is located.

In the Figures: 1, ultraviolet curable coating (UV) layer; 2, wear-resistant layer; 3, decoration layer; 4, first SPC substrate layer; 5, second SPC substrate layer; 6, third SPC substrate layer; and 7, sound-absorbing layer.

### DETAILED DESCRIPTION OF EMBODIMENTS

To make the object, technical solutions and advantages of the present disclosure more clearly, the present disclosure will be clearly and fully described below. It is obvious that described herein are only some embodiments of the present disclosure, rather than all embodiments. Based on the embodiments of the present disclosure, other embodiments obtained by those of ordinary skill in the art without making creative effort shall fall within the scope of the present disclosure.

Technologies or conditions that are not specified in embodiments are performed according to technologies or conditions descried in document in the prior art or specification of products. Reagents or instruments without indicating manufacturers are conventional commercially available.

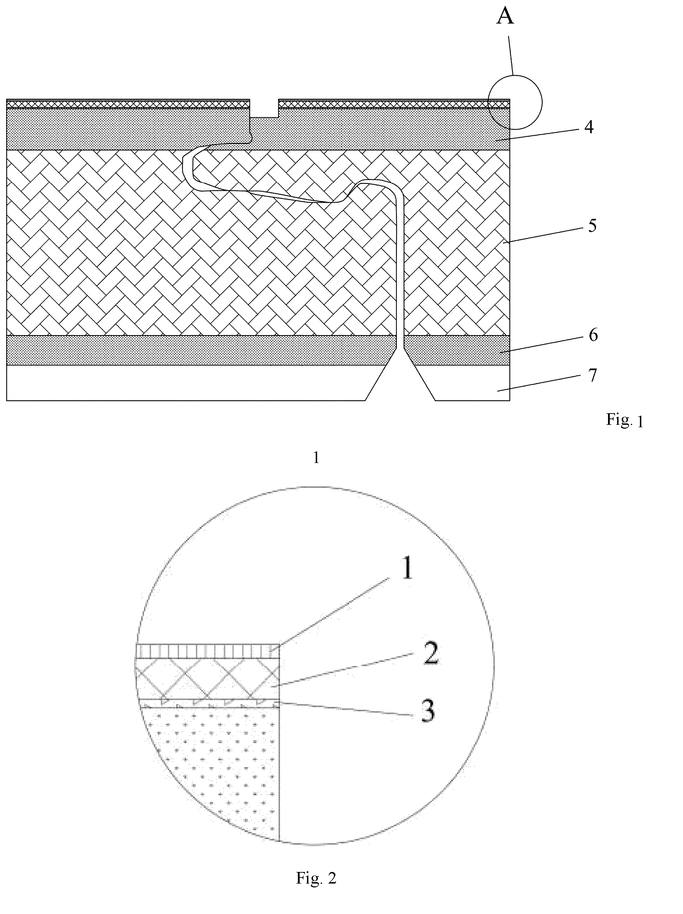

A marble tile-imitating stone plastic composite (SPC) floorboard is provided. Referring to Figs. 1-2, the marble tile-imitating SPC floorboard includes an ultraviolet curable coating (UV) layer 1, a wear-resistant layer 2, a decoration layer 3, a first SPC substrate layer 4, a second SPC substrate layer 5being a foamed SPC layer, a third SPC substrate layer 6 and a sound-absorbing layer 7, where the UV layer 1, the wear-resistant layer 2, the decoration layer 3, the first SPC substrate layer 4, the second SPC substrate layer 5, the third SPC substrate layer 6 and thesound-absorbing layer 7 are arranged in sequence.

The first SPC substrate layer includes 12-20 wt.% of a first polyvinyl chloride (PVC) resin, 12-20 wt.% of a first silicone-modified acrylic resin and 50-70 wt.% ofcalcium carbonate, and a rest component of the first SPC substrate layer includes a first auxiliary and a first functional additive.

In an embodiment, the marble tile-imitating SPC floorboard is provided with a grooveconfigured to recess downward from the wear-resistant layer, and a lowest point of the groove is not lower than a middle point of the first SPC substrate layer along a thickness direction of the first SPC substrate layer. The groove is configured to imitate a tile groutaesthetic effect.

In an embodiment, the third SPC substrate layer includes 12-20 wt.% of a second PVC resin, 12-20 wt.% of a second silicone-modified acrylic resin and 50-70 wt.% ofcalcium carbonate, and a rest component of the third SPC substrate layer includes a second auxiliary and a second functional additive.

In an embodiment, raw materials ofthe first SPC substrate layer include: 20-30 parts by weight of the first PVC resin, 80-110parts by weight ofcalcium carbonate, 2-4 parts by weight of a first calcium-zinc stabilizer, 2-4parts by weight ofacrylic copolymer (ACR), 2-4parts by weight of a firsttoughening agent, 0.5-3parts by weight of a first internal lubricant, 0.5-3parts by weight ofa first external lubricant, 0.1-0.5parts by weight ofcarbon black and 20-30parts by weight of the first silicone-modified acrylic resin; and
raw materials ofthe third SPC substrate layer include: 20-30 parts by weight of the second PVC resin, 80-110parts by weight ofcalcium carbonate, 2-4 parts by weight of a second calcium-zinc stabilizer, 2-4parts by weight ofACR, 2-4parts by weight of a secondtoughening agent, 0.5-3parts by weight of a second internal lubricant, 0.5-3parts by weight ofa second external lubricant, 0.1-0.5parts by weight ofcarbon black and 20-30parts by weight of the second silicone-modified acrylic resin.

In an embodiment, the raw materials ofthe first SPC substrate layer include: 22-28 parts by weight of the firstPVC resin, 95-110parts by weight ofcalcium carbonate, 3-4 parts by weight of the first calcium-zinc stabilizer, 2.5-3.5parts by weight ofACR, 2-3parts by weight of the firsttoughening agent, 0.5-2parts by weight of the first internal lubricant, 0.5-2parts by weight ofthe first external lubricant, 0.1-0.5parts by weight ofcarbon black and 20-30parts by weight of the first silicone-modified acrylic resin; and
the raw materials ofthe third SPC substrate layer include: 22-28 parts by weight of the second PVC resin, 95-110parts by weight ofcalcium carbonate, 3-4 parts by weight of the second calcium-zinc stabilizer, 2.5-3.5parts by weight ofACR, 2-3parts by weight of the secondtoughening agent, 0.5-2parts by weight of the second internal lubricant, 0.5-2parts by weight ofthe second external lubricant, 0.1-0.5parts by weight ofcarbon black and 20-30parts by weight of the second silicone-modified acrylic resin.

In an embodiment, raw materials of each of the first silicone-modified acrylic resin and the second silicone-modified acrylic resin a silicone monomer and an epoxy acrylic resin, where the silicone monomer accounts for 10%-50% of a total weight of the silicone monomer and the epoxy acrylic resin, preferably 20-40%, and further preferably 30%-40%.

In an embodiment, the first silicone-modified acrylic resin and the second silicone-modified acrylic resin each has a viscosity of thesilicone-modified acrylic resin of 1000-2000 mPa·s.

In an embodiment, raw materials of the second SPC substrate layer include: 40-60 parts by weight of a third PVC resin, 70-100parts by weight of calcium carbonate, 30-60 parts by weight of a foaming recycled material, 3-5 parts by weight of a third calcium-zinc stabilizer, 1-3 parts by weight of ACR, 5-10 parts by weight of a foamingregulator, 0.1-0.5 parts by weight of a yellow foaming agent, 0.1-0.3parts by weight of awhite foaming agent, 0.5-3parts by weight of a third internal lubricant and 0.5-3 parts by weight of a third external lubricant.

In an embodiment, the raw materials of the second SPC substrate layer include: 40-60 parts by weight of the third PVC resin, 80-90parts by weight of calcium carbonate, 35-50 parts by weight of the foaming recycled material, 3-5 parts by weight of the third calcium-zinc stabilizer, 2-3 parts by weight of ACR, 5-8 parts by weight of the foamingregulator, 0.1-0.5 parts by weight of the yellow foaming agent, 0.1-0.3parts by weight of thewhite foaming agent, 0.5-2parts by weight of the third internal lubricant and 0.5-2 parts by weight of the third external lubricant.

In an embodiment, a particle size of the calcium carbonate is 5-20 µm, preferably 5-15 µm.

In an embodiment, the decoration layer has at least one of a wood texture, a marble texture, a granite texture, a cloth texture, a carpet texture, a cement texture and a metal texture; preferably, the decoration layer has the marble texture. The decoration layer includes a decoration layer prepared by PVC color films, a decoration layer printed by high-definition ink or a decoration layer printed bydigital printing.

In an embodiment, the wear-resistant layer is prepared by modified PVC with high transparency and high wear resistance.

In an embodiment, the UV layer is provided above the wear-resistant layer. The UV layer is formed through coating an ultraviolet (UV) curable transparent coating on the wear-resistant layer, and a coated weight of the ultraviolet curable transparent coating is 15-30g/m².

In an embodiment, the groove is formed through planing. In an embodiment, the planing is performed through a planing tool with a high-speed rotation. A lowest point of the planing does not exceed the half of the thickness of the first SPC substrate layer. The groove prepared by planing is configured to simulate a tile grout aesthetic effect.

In an embodiment, the sound-absorbing layer is provided below the third SPC substrate layer. The sound-absorbing layer is configured to reduce noises generated by ground activities, such as footsteps and movement of furniture. The sound-absorbing layer is generally made by irradiated cross-linked polyethylene (IXPE), ethylene-vinyl acetate copolymer (EVA) or cork. The sound-absorbing layer isadhered with the third SPC substrate layer through glue.

In an embodiment, a thickness of the UV layer is 0.13-0.17 mm, a thickness of the wear-resistant layer is 0.3-0.7 mm, a thickness of the decoration layer is 0.05-0.09 mm, a thickness of the first SPC substrate layer is 0.8-1.2 mm, a thickness of the second SPC substrate layer is 3.2-12.0 mm, a thickness of the third SPC substrate layer is 0.8-1.2 mm, and a thickness of the sound-absorbing layer 0.8-2.5 mm.

In an embodiment, the groove has a width of 1.5-5 mm, preferably 2-3 mm.

A method for preparing a marble tile-imitating stone plastic composite (SPC) floorboard includes the following steps.

(S1) Raw materials ofa first SPC substrate layer are mixed under heating to produce a first mixture. Raw materials of a second SPC substrate layer are mixed under heating to produce a second mixture. Raw materials of a third SPC substrate layer are mixed under heating to produce a third mixture.

(S2) The first mixture, the second mixture and the third mixture are transferred to an extruder, respectively.

(S3) The second mixture is injected to a mold through a center flow channel of a merging core. The first mixture is injected to the mold through a first side flow channel of the merging core, and the third mixture is injected to the mole through a second side flow channel of the merging core. A three-layer crude plate is performed through co-extrusion by a distributor, where a top layer of the three-layer crude plate is the first SPC substrate layer, a middle layer of the three-layer crude plate is the second SPC substrate layer, and a bottom layer of the three-layer crude plate is the third SPC substrate layer.

(S4) A decoration layer is formed on the first SPC substrate layer. A wear-resistant layer is formed on decoration layer.

(S5) An ultraviolet (UV) curable transparent coating is coated on the wear-resistant layer to form a UV curable coating layer.

(S6) An upper surface of the crude SPC floorboard is patterned through a plate roller.

(S7) The crude SPC floorboard is subjected to planing to form a groove with a tile grout aesthetic effect, so as to produce the marble tile-imitating SPC floorboard, where the planing is performed on the UV layer, the wear-resistant layer, the decoration layer and a part of the first SPC substrate layer, and a lowest point of the groove is not lower than a middle point of the first SPC substrate layer along a thickness direction of the first SPC substrate layer.

In an embodiment, before step (S7), slotting is performed on edges of the crude plate to form a special structure that is convenient for splicing assembly, such as a straight groove and a lock groove, preferably, the lock groove.

This application is further described below with reference to the embodiments, which are not intended to limit the disclosure.

### Example 1

A formula of a marble tile-imitating stone plastic composite (SPC) floorboard was described as follows.

A solid SPC substrate layer included a first SPC substrate layer and a third SPC substrate layer. A second SPC substrate layer was sandwiched between the first SPC substrate layer and the third SPC substrate layer to form an A-B-A structure.

Raw materials of thefirst SPC substrate layer included: 25 parts by weight ofa first PVC powder, 100 parts by weight of heavy calcium carbonate, 3.6 parts by weight of a first calcium-zinc stabilizer, 3 parts by weight of ACR, 1 part by weight of a first internal lubricant, 0.8 parts by weight ofa first external lubricant, 2.2parts by weight of a firsttoughening agent, 0.3parts by weight ofcarbon black, and 25parts by weight of a first silicone-modified acrylic resin; and

raw materials of thethird SPC substrate layer included: 25 parts by weight of a second PVC powder, 100 parts by weight of heavy calcium carbonate, 3.6 parts by weight of a second calcium-zinc stabilizer, 3 parts by weight of ACR, 1 part by weight of a second internal lubricant, 0.8 parts by weight ofa second external lubricant, 2.2parts by weight of a secondtoughening agent, 0.3parts by weight ofcarbon black, and 25parts by weight of a second silicone-modified acrylic resin.

In an embodiment, the first PVC powder and the second PVC powder were both SG5 PVC powder.

In an embodiment, a particle size of the heavy calcium carbonate was 400-mesh, where too coarse particles may cause products to be prone to scorching, while too fine particles may increase cost and easily make the products too brittle.

In an embodiment, an ordinary SPC recycled material can be adopted to reduce cost and improve efficiency. The ordinary SPC recycled material was a crushed material of the marble tile-imitating SPC floorboard, including some PVC resin and other components. The ordinary SPC recycled material was a concentration material relative to other components.

In an embodiment, each of the first calcium-zinc stabilizer and the second calcium-zinc stabilizer was a non-toxic and environmentally-friendly calcium-zinc stabilizer for PVC, including a zinc soap, a calcium soap, an auxiliary stabilizer and a lubricant, which had characteristics of non-toxicity, high efficiency, good stability, fine cell structure of the products, excellent demolding performance, outstanding processing performance and long production cycle.

In an embodiment, ACR was a foamingauxiliary. ACR was copolymerized frommethyl methacrylate (MMA) and acrylics, which can enhanceplasticizing performance during processing of unplasticized polyvinyl chloride (PVCU) and improve its fluidity.

Each of the first internal lubricant and the second internal lubricant was a G60-type lubricant, mainly including stearic acid.

The first toughening agent and the second adopted a modified chlorinated polyvinyl chloride (CPVC) resin particle.

In an embodiment, the silicone-modified acrylic resin was prepared through the following steps.

Industrial preparation methods for each of the first silicone-modified acrylic resin and the second silicone-modified acrylic resin usually involved chemical reactions and process optimization to ensure performance stability of the products and the feasibility of large-scale production. Common industrial preparation methods and their key steps were described as follows.
1) 70 parts by weight of epoxy acrylic resin, 30 parts by weight of a silicone monomer and an appropriate amount of a first solvent were added into a reactor, where the epoxy acrylic resin was used as a matrix resin, and was configured to provide mechanical strength, adhesion and curing performance; the silicone monomer can be γ-glycidoxypropyltrimethoxysilane; and the first solvent can be toluene, acetone and butanone. A catalyst was added into the reactor, where the catalyst was configured to promote a reaction between the silicone monomer and the epoxy acrylic resin, and the catalyst can be an acid catalyst or a basic catalyst, preferably tetramethylammonium hydroxide. A mixture was obtained.
2) The mixture was heated to 80-100 °C and stirred for 4-6 h. A viscosity of the mixture and an epoxide number of the mixture were monitored, where the viscosity of the mixture was 1000-50000 mPa·s at 25 °C, and the epoxide number of the mixture after modification may reduce to 0.2-0.4 eq/100g.
3) The mixture was cooled to below 50 °C, followed by filter to remove impurities. A second solvent, such as toluene, acetone, butanone, was added to adjust the viscosity of the mixture to 1000-2000 mPa·s to obtain the silicone-modified acrylic resin.
4) The silicone-modified acrylic resin was put into a sealed container and stored in a cool and dry place.

Those skilled in the art can also purchase the commercially-available silicone-modified acrylic resin.

In an embodiment, the carbon black was configured to color the crude plate.

Raw materials of the second SPC substrate layer included: 50 parts by weight of a third PVC powder, 80 parts by weight of calcium carbonate with 1250-mesh, 38 parts by weight of a foaming recycled material, 4.5 parts by weight of a third calcium-zinc stabilizer, 2.5 parts by weight of ACR, 6 parts by weight of a foamingregulator, 0.25 part by weight of a yellow foaming agent, 0.1 part by weight of a white foaming agent, 0.95 part by weight of a third internal lubricant and 0.8 part by weight of a third external lubricant.

In an embodiment, the third PVC powder was a SG8 PVC powder. Owing to the second SPC substrate layer was configured for foaming, a polymerization degree of the SG8 PVC powder was 650-740, and a K value of the SG8 PVC powder is 55-59, which is more suitable for foaming.

In an embodiment, the third calcium carbonate powder was 250-mesh calcium carbonate. When a particle size of the third calcium carbonate powder was matched with the yellow foaming agent and the white foaming agent, the third calcium carbonate powder played a role of a nucleating agent to promote foaming. The third calcium carbonate powder with a suitable particle size and without agglomeration will better adsorb a foaming gas to form the bubble nucleus, control the number of bubble pores, and made the bubble pores finer.

The third calcium carbonate powder, as the nucleating agent, adsorbed the foaming gas to form the bubble nucleus, controlled the number of bubble pores, and made the bubble pores finer. The third calcium carbonate powder improved the melt performance with a large rigidity which can slow down deformation and mobility of the melt, thereby inhibiting rapid expansion of the cell structure. The third calcium carbonate powder controlled the bubble pores to be finer. When third calcium carbonate powder was larger than 20 µm or too fine, such as less than 5 µm, self-aggregation may appear to affect the foaming effect although large particles are not easy to spontaneously agglomerate due to high surface energy, uneven local dispersion caused by mechanical accumulation is easy to appear if a processing shear force is insufficient.

In an embodiment, the foaming recycled material was the crushed material of the marble tile-imitating SPC floorboard. The foaming recycled material was a concentration material relative to other components. Residual foaming agents in the foaming recycled material can be used. In addition, the foaming recycled material had a low density, which facilitated to reduce a density of the second SPC substrate layer.

In an embodiment, the density of the second SPC substrate layer was 1.1-1.3g/cm³.

In an embodiment, the third calcium-zinc stabilizer adopted a non-toxic and environmentally-friendly calcium-zinc stabilizer for PVC, including a zinc soap, a calcium soap, an auxiliary stabilizer and a lubricant, which has characteristics of non-toxicity, high efficiency, good stability, fine cell structure of the products, excellent demolding performance, outstanding processing performance and long production cycle.

ACR was the foamingauxiliary. ACR was copolymerized frommethyl methacrylate (MMA) and acrylics, which can enhanceplasticizing performance during processing of unplasticized polyvinyl chloride (PVCU) and improve its fluidity.

In an embodiment, the third internal lubricant adopted the G60-type lubricant, mainly including stearic acid.

In an embodiment, the third external lubricant adopted aPE wax.

In an embodiment, the foamingregulator was theacrylate processing aid.

In an embodiment, the yellow foaming agent had a gas yield of 220-230 mL/g, a decomposition temperature of 195-205°C, and a volatile content of ≤0.2% at 110°C for 1 h.

In an embodiment, the white foaming agent had a gas yield of 130-140 mL/g, a decomposition temperature of 157-165 °C, and a volatile content of ≤0.5% at 110°C for 1 h.

A method for preparing the marble tile-imitating SPC floorboard included the following steps.

2.1 The first SPC substrate layer, the second first SPC substrate layer and the third first SPC substrate layer were prepared in different reactors according to the above formula, specifically, the raw materials of the first SPC substrate layer and the third SPC substrate layer were added to a first high-speed stirrer, and then were heated to 110-120°C, followed by cooling; the raw materials of the second SPC substrate layer were added to a second high-speed stirrer, and then were heated to 110-120°C, followed by cooling.

2.2 The raw materials of the first SPC substrate layer and the third SPC substrate layer was cooled to 65 °C to obtain the first mixture and the third mixture, respectively, and then were transferred into a first storage silo. The first mixture and the second mixture in the first storage silo were transferred into a twin-screw extruder through a spiral feeding system. The raw materials of the second SPC substrate layer were cooled to 65 °C to obtain the third mixture, and then were transferred into a second storage silo. The second mixture in the second storage silo were transferred into a single-screw extruder through the spiral feeding system.

2.3 The first mixture and the third mixture were prepared through the twin-screw extruder. The second mixture was prepared through the single-screw extruder.

2.4 The second mixture was injected to a mold through a center flow channel of a merging core. The first mixture was injected to the mold through the first side flow channel of the merging core, and the third mixture was injected to the mold through the second side flow channel of the merging core. The first mixture, the second mixture and the third mixture were distributed through a distributor to form the three-layer crude plate, where the top layer of the three-layer crude plate was the first SPC substrate layer, the middle layer of the three-layer crude plate was the second SPC substrate layer, and the bottom layer of the three-layer crude plate was the third SPC substrate layer.

2.4.1 The three-layer crude plate was extruded through the following steps.

2.4.2 2.4.1.1 Thetwin-screw extruder was heated or pre-cooled.

2.4.1.1.1 A temperature of a die orifice was set to 170-180 °C, a temperature of the mold was set to 180-190 °C, and a temperature of a side plate was set to 190-210 °C. The twin-screw extruder was started.

2.4.1.1.2 A temperature of the distributor was set, and was allowed to be appropriately adjusted under the conditions that guarantee of stable extrusion. Thedistributor was heated for about 0.5 h.

2.4.1.1.3 Temperatures of a first mold roller, a second mold roller, a third mold roller, a fourth mold roller and a fifth mold roller were set, and were allowed to be appropriately adjusted under the conditions that guarantee of stable extrusion, where the first mold roller was set to 190 °C, the second mold roller was set to 190 °C, the third mold roller was set to 180 °C, and the fourth mold roller and the fifth mold roller were cold water roller. The first mold roller, the second mold roller, the third mold roller, the fourth mold roller and the fifth mold roller were started to heat for 1.5 h.

2.4.1.1.4 A cooling roller was set to ensure circulation of cooling water, and a temperature of the cooling water was about 15 °C.

2.4.1.2 The twin-screw extruder was started through the following steps.

2.4.1.3 2.4.1.2.1 The twin-screw extruder was started.

2.4.1.2.1.1 A rotating speed of 80# auxiliary machine (a twin-screw extruder) was set to 200 R/min, and a feeding speed of the 80# auxiliary machine was set to 120 R/min.

2.4.1.2.1.2 After extrusion of the 80# auxiliary machine, a rotating speed of 92# main machine (another twin-screw extruder) was set to 200 R/min, and a feeding speed of the 92# main machine was set to 90 R/min.

2.4.1.2.1.3 The rotating speed of 80# auxiliary machine, the feeding speed of the 80# auxiliary machine, the rotating speed of 92# main machine and the feeding speed of the 92# main machine were slowly increased, and were increased by 20-40 R/min each time.

2.4.1.2.1.4 A stable rotating speed of the 80# auxiliary machine, a stable feeding speed of the 80# auxiliary machine, a stable rotating speed of the 92# main machine, a stable feeding speed of the 92# main machine, and an operation current were set, and can be appropriately adjusted on the premise of ensuring the stable extrusion.

2.4.1.2.1.5 A 6.5 mm marble tile-imitating SPC floorboard was taken as a target product, and rotating speeds of the first mold roller, the second mold roller, the third mold roller, the fourth mold roller, and the fifth mold roller were set as reference.

2.4.1.2.1.6 A traction, a bracket, and a lamp shade were set as reference.

2.4.1.2.1.7 2.4.1.3 The three-layer crude plate was extruded through the following steps.

2.4.1.3.1 A machine table was moved to allow the first mold roller and the second mold roller to be close to the dieorifice, and an extrusion plate was prepared to be pulled.

2.4.1.3.2 The extrusion plate, after being pulled from the dieorifice, was manually pulled onto thecooling roller for transfer.

2.4.1.3.3 After flatness of the crude plate and thickness of each layer were adjusted, the lamp shade was opened, followed by laminating to form a laminated plate, where the laminated plate was laminated with aPVC color film which can be various patterns as a base pattern. In this step, a grey stone-pattern PVC color film was selected. The wear-resistant layer was prepared.

.4.1.3.4 According to a required width of the laminated plate, a gap between rotating blades was adjusted for trimming.

2.4.1.3.5 After the laminated plate passes through a cooling area, the laminated plate was cut to into the crude plate with a required size (e.g., 1800 mm*970 mm, 1500 mm*970mm, and 1200 mm*970mm) by a plate shearing machine. In this embodiment, the required size was set to 1500 mm*970mm.

2.4.1.3.6 An ultraviolet curable transparent coating was coated on the wear-resistant layer to form an ultraviolet curable coating (UV) layer.

2.4.1.3.7 A pattern was formed on an upper surface of the crude plate through a plate roller.

2.4.1.3.8 The crude plate was cut by a saw plate into multiple smaller crude plates with a size of 1500 mm*225 mm.

2.5 Slotting was performed through the following steps.

2.5.1 Edges of the crude plate (1500 mm*225 mm) were subjected to slotting by using a CNC milling machine or a slotting machine to form a lock-type splicing structure which was convenient for assembly, where two long edges were machined to respectively have a female groove and a male groove, and two short edges were machined to respectively have a female groove and a male groove.

Specifically, one of the two long edges (1500 mm) was processed to form a male groove (i.e., protruding structure), and the other of the two long edges was processed to form a female groove (i.e., recessed structure), so as to achieve the long-edge splicing of two plates. One of the two short edges (225 mm) was processed to form a male groove, and the other of the two short edges was processed to form a female groove, so as to achieve the short-edge splicing of two plates. By manes of the lock-type joint formed by the female groove and the male groove, adjacent plates can be closely and reliably connected with each other.

The width of the male groove was 0.1-0.2 mm (reserved assembly clearance) smaller than thate of the female groove, and the depth of the male groove fitted the depth of the female groove (generally 2/3-1/2 of the plate thickness).

The width of the female groove was the sum of the width of the male groove and the clearance, and the female groove was identical to the male groove in the depth.

2.5.2 Slotting (planing) was performed on edges of adjacent two surfaces of each crude plate. A slotting depth was 0.6-1.0 mm, and a slotting width was 2-3 mm. The slotting was performed through a planing tool with a high-speed rotation to form a groove with a tile grout aesthetic effect.

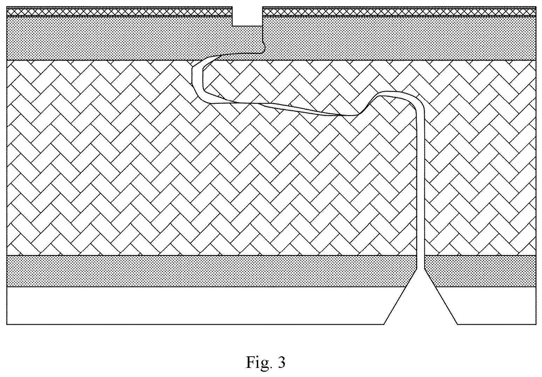

For example, four edges of a cut crude plate were respectively marked with 1, 2, 3 and 4 along a clockwise direction. Edges marked with 1 and 2 were subjected to planing to remove the UV layer, the wear-resistant layer, the decorative layer and a part of the first SPC substrate layer to form a groove. In this way, each edge exhibited a grout appearance after splicing. Fig. 1 shows the marble tile-imitating SPC floorboard, where the side where the male groove was located was slotted, while the side where the female groove was located was not processed (namely, maintaining the original flat surface). After adjacent plates were spliced through the female groove-male groove joint, a groove (depth: 0.6-1.0 mm; width: 2-3 mm) with the decorative grout appearance was formed. Fig. 3 shows the marble tile-imitating SPC floorboard, where the side where the female groove was located was slotted, while the side where the male groove was located was not processed. After adjacent plates were spliced through the female groove-male groove joint, a groove (depth: 0.6-1.0 mm; width: 2-3 mm) with the decorative grout appearance was formed.

In addition, other positions of the crude plate can also be subjected to slotting to obtain the groove with the tile grout aesthetic effect.

In this embodiment, the thickness of the UV layer was 0.15 mm, the thickness of the wear-resistant layer was 0.3 mm, the thickness of the decoration layer was 0.07 mm, the thickness of the first SPC substrate layer 0.8-1.0 mm, the thickness of the second SPC substrate layer was 3.2-3.5 mm, the thickness of the third SPC substrate layer was 0.8-1.0, and the thickness of the sound-absorbing layer was 1.0-2.0 mm.

In this embodiment, a planing thickness of the UV layer was 0.15 mm, a planing thickness of the wear-resistant layer was 0.3 mm, a planing thickness of the decoration layer was 0.07 mm, and a planing thickness of part of the first SPC substrate layer was 0.1-0.4 mm, the planing was performed to form the groove. A depth of the groove was about 0.6-1.0 mm to imitate the tile grout aesthetic effect.

A lowest point of the groove is not lower than a middle point of the first SPC substrate layer along a thickness direction of the first SPC substrate layer.

2.5.4 After assembly, amarble-pattern tile grout aesthetic effect was shown, where a grout size can be adjusted according to needs of customers. The marble tile-imitating SPC floorboard was prepared.

### Example 2

A formula of the marble tile-imitating SPC floorboard was described as follows.
Raw materials of the first SPC substrate layer included: 25 parts by weight ofthe first PVC powder, 110 parts by weight of heavy calcium carbonate, 3 parts by weight of the first calcium-zinc stabilizer, 3 parts by weight of ACR, 1 part by weight of the first internal lubricant, 0.8 parts by weight ofthe first external lubricant, 2.2parts by weight of the firsttoughening agent, 0.3parts by weight ofcarbon black, and 20parts by weight of the first silicone-modified acrylic resin; and
raw materials of the third SPC substrate layer included: 25 parts by weight ofthe second PVC powder, 110 parts by weight of heavy calcium carbonate, 3 parts by weight of the second calcium-zinc stabilizer, 3 parts by weight of ACR, 1 part by weight of the second internal lubricant, 0.8 parts by weight ofthe second external lubricant, 2.2parts by weight of the secondtoughening agent, 0.3parts by weight ofcarbon black, and 20parts by weight of the second silicone-modified acrylic resin.
Raw materials of the second SPC substrate layer included: 45 parts by weight of the third PVC powder, 80 parts by weight of calcium carbonate, 40 parts by weight of the foaming recycled material, 3.5 parts by weight of the third calcium-zinc stabilizer, 2.5 parts by weight of ACR, 0.95 part by weight of the third internal lubricant, 0.8 part by weight of the third external lubricant, 6 parts by weight of the foamingregulator, 0.25 part by weight of the yellow foaming agent and0.1 part by weight of the white foaming agent.

The method for preparing the marble tile-imitating SPC floorboard was the same as that in Example 1.

### Example 3

A formula of the marble tile-imitating SPC floorboard was described as follows.
Raw materials of the first SPC substrate layer included: 25 parts by weight ofthe first PVC powder, 95 parts by weight of heavy calcium carbonate, 3.6 parts by weight of the first calcium-zinc stabilizer, 3 parts by weight of ACR, 1 part by weight of the first internal lubricant, 0.8 parts by weight ofthe first external lubricant, 2.2parts by weight of the firsttoughening agent, 0.3parts by weight ofcarbon black, and 30parts by weight of the first silicone-modified acrylic resin; and
raw materials of the third SPC substrate layer included: 25 parts by weight ofthe second PVC powder, 95 parts by weight of heavy calcium carbonate, 3.6 parts by weight of the second calcium-zinc stabilizer, 3 parts by weight of ACR, 1 part by weight of the second internal lubricant, 0.8 parts by weight ofthe second external lubricant, 2.2parts by weight of the secondtoughening agent, 0.3parts by weight ofcarbon black, and 30parts by weight of the second silicone-modified acrylic resin.
Raw materials of the second SPC substrate layer included: 55 parts by weight of the third PVC powder, 80 parts by weight of calcium carbonate, 35 parts by weight of the foaming recycled material, 4 parts by weight of the third calcium-zinc stabilizer, 2.5 parts by weight of ACR, 0.95 part by weight of the third internal lubricant, 0.95 part by weight of the third external lubricant, 6 parts by weight of the foamingregulator, 0.25 part by weight of the yellow foaming agent and0.1 part by weight of the white foaming agent.

The preparation of the marble tile-imitating SPC floorboard was the same as that in Example 1.

### Example 4

The formula of this example was the same as that in Example 1, and the preparation provided herein was basically the same as that in Example 1 except for the grooving position.

The grove was slotted through the following steps.
(1) Edges of the crude plate (1500 mm*225 mm) were subjected to slotting (planing), where two long edges were machined to respectively have a female groove and a male groove, and two short edges were machined to respectively have a female groove and a male groove.
   Specifically, one of the two long edges (1500 mm) was processed to form a male groove (i.e., protruding structure), and the other of the two long edges was processed to form a female groove (i.e., recessed structure), so as to achieve the long-edge splicing of two plates. One of the two short edges (225 mm) was processed to form a male groove, and the other of the two short edges was processed to form a female groove, so as to achieve the short-edge splicing of two plates. By manes of the lock-type joint formed by the female groove and the male groove, adjacent plates can be closely and reliably connected with each other.
(2) Each of the crude plate (1500 mm*225 mm) were subjected to form a through groove at a central line along its length direction. Astarting point of the through groove is at a middle position of a long edge (1500 mm), and an ending point of the through groove is at a middle position of another long edge (1500 mm). A planing depth was 0.6-1.0 mm, and a slotting width was 2-3 mm.The slotting was performed through a planing tool with a high-speed rotation to form a groove with a tile grout effect..

### Comparative example 1

A formula of a conventional floorboard was described as follows.

Raw materials of a substrate layer included: 75 parts by weight of a fourth PVC powder, 250 parts by weight of heavy calcium carbonate, 7 parts by weight of a stabilizer, 0.7 part by weight of a fourth external lubricant, and 1.7 parts by weight of a fourth internal lubricant of a CA80-type lubricant.

In an embodiment, the fourth PVC powder was SG5 PVC powder.

In an embodiment, a particle size of the heavy calcium carbonate was 400-mesh, where too coarse particles may cause products to be prone to scorching, while too fine particles may increase cost and easily make the products too brittle.

In an embodiment, the stabilizer was calcium-zinc stabilizer.

In an embodiment, the fourth internal lubricant was stearic acid.

In an embodiment, fourth external lubricant was PE wax.

The conventional floorboard was prepared through the following steps.

(S100) 400-mesh heavy calcium carbonate, the fourth PVC powder, a part of a SPC recycled material, the stabilizer, the external lubricant and the internal lubricant were added into a high-speed stirrer, and were heated to 110-120°C, followed by being discharged and cooling to obtain a mixture.

(S200) The mixture obtained from step (S100) was cooled to 65 °C, and then was put into a storage silo. The mixture in the storage silo was transferred to a conical twin-screw extruder through a spiral feeding system.

(S300) A temperature of a barrel was controlled at 160-180 °C, a temperature of a mole was controlled at 200-220 °C, and a cooling temperature of die orifice was controlled at 200-220 °C. Then the mixture was extruded through the mold for forming, followed by thickness adjustment through a first mold roller and a second mold roller for shaping. A third mold roller was configured to form a stone-pattern color film and a wear-resistant layer. A fourth mold roller and a fifth mold roller were configured to form a marble texture. A crude plate was obtained after cooling, where the size of the crude plate was 1500 mm*970 mm. The size of the crude plate was further cut to 1500*225mm.

(S400) Slotting was performed through the following steps.

(S410) Edges of the crude plate (1500 mm*225 mm) were subjected to slotting, where two long edges were machined to respectively have a female groove and a male groove, and two short edges were machined to respectively have a female groove and a male groove.

Specifically, one of the two long edges (1500 mm) was processed to form a male groove (i.e., protruding structure), and the other of the two long edges was processed to form a female groove (i.e., recessed structure), so as to achieve the long-edge splicing of two plates. One of the two short edges (225 mm) was processed to form a male groove, and the other of the two short edges was processed to form a female groove, so as to achieve the short-edge splicing of two plates. By manes of the lock-type joint formed by the female groove and the male groove, adjacent plates can be closely and reliably connected with each other.

(S420) Slotting was performed on adjacent two edges of each crude plate. The slotting was performed through a planing tool with a high-speed rotation.

For example, four edges of a cut crude plate were respectively marked with 1, 2, 3 and 4 along a clockwise direction. Edges marked with 1 and 2 were subjected to planing.

In this embodiment, the conventional floorboard has a single substrate layer. During edge planing, parts above the substrate layer would be all planed, and a small part of the substrate layer was removed. A planing depth of the substrate layer was about 0.1-0.4 mm, and a planing width of the substrate layer was 2-3 mm, so as to obtain a groove with a tile grout aesthetic effect.

### Comparative example 2

A formula of a conventional cold-laminated multi-layer floorboard was described as follows.

Raw materials of a substrate layer included: 400 parts by weight of a fifth PVC powder, 1700 parts by weight of calcium carbonate, 150 parts by weight ofdioctyl terephthalate (DOTP) oil, 7 parts by weight of a stabilizer, and 3 parts by weight ofcarbon black.

In this embodiment, the fifth PVC powder was SG5 PVC powder.

In this embodiment, the calcium carbonate was 400-mesh calcium carbonate.

In this embodiment, the stabilizer was calcium-zinc stabilizer.

The conventional cold-laminated multi-layer floorboard was prepared through the following steps.

(S100) 400-mesh heavy calcium carbonate, the fifth PVC powder, the stabilizer, the carbon black and the DOTP oil were added into an internal mixer for internal mixing to obtain a mixed material.

(S200) The mixed material was subjected to open milling, followed by calendaring to obtain a luxury vinyl tile (LVT) layer.

(S300) A wear-resistant layer, a color film and the LVT layer were subjected to thermal lamination to obtain a first semi-finished product.

(S400) The first semi-finished product was attached with a wood-plastic composite which was commercially available by glue to obtain a second semi-finished product.

(S500) The second semi-finished product was attached with another LVT layer to obtain the conventional cold-laminated multi-layer floorboard, where the size of the conventional cold-laminated multi-layer floorboard was 1500 mm*970 mm. The size of the conventional cold-laminated multi-layer floorboard was further cut to 1500*225mm.

(S600) Slotting was performed through the following steps.

(S610) Edges of the conventional cold-laminated multi-layer floorboard (1500 mm*225 mm) were subjected to slotting, where two long edges were machined to respectively have a female groove and a male groove, and two short edges were machined to respectively have a female groove and a male groove.

Specifically, one of the two long edges (1500 mm) was processed to form a male groove (i.e., protruding structure), and the other of the two long edges was processed to form a female groove (i.e., recessed structure), so as to achieve the long-edge splicing of two plates. One of the two short edges (225 mm) was processed to form a male groove, and the other of the two short edges was processed to form a female groove, so as to achieve the short-edge splicing of two plates. By manes of the lock-type joint formed by the female groove and the male groove, adjacent plates can be closely and reliably connected with each other.

(S620)Slotting (planing) was performed on edges of adjacent two surfaces of each crude plate. A slotting depth was 0.6-1.0 mm, and a slotting width was 2-3 mm. The slotting was performed through a planing tool with a high-speed rotation to form a groove with a tile grout effect.

For example, four edges of a cut crude plate were respectively marked with 1, 2, 3 and 4 along a clockwise direction. Edges marked with 1 and 2 were subjected to planing to remove parts above the substrate layer, and a small part of the substrate layer was also removed. A planing depth of the substrate layer was about 0.1-0.4 mm, and a planing width of the substrate layer was 2-3 mm, so as to obtain a groove with a tile grout aesthetic effect.

### Test example 1

A content of the silicone monomer in the silicone-modified acrylic resin to obtain silicone-modified acrylic resins with different contents of silicone monomer.

A method for preparing the silicone-modified acrylic resins with different contents of silicone monomer was described as follows.

(S1)Epoxy acrylic resin, silicone monomer, and a first solvent were added into a reactor, where the silicone monomer can be γ-glycidoxypropyltrimethoxysilane, and the first solvent can be toluene, acetone and butanone. Contents of the epoxy acrylic resin and the silicone monomer were shown in Table 1. Then a catalyst tetramethylammonium hydroxide was added. A mixture was obtained.

(S2) The mixture was heated to 80-100 °C and stirred for 4-6 h. A viscosity of the mixture and an epoxide number of the mixture were monitored, where the viscosity of the mixture was 1000-50000 mPa·s at 25 °C, and the epoxide number of the mixture after modification may reduce to 0.2-0.4 eq/100g.

(S3) The mixture was cooled to below 50 °C, followed by filter to remove impurities. A second solvent, such as toluene, acetone, butanone, was added to adjust the viscosity of the mixture to 1000-2000 mPa·s to obtain the silicone-modified acrylic resin.

(S4) The silicone-modified acrylic resin was put into a sealed container and stored in a cool and dry place.

The silicone-modified acrylic resins obtained in this embodiment can be used to prepare the marble tile-imitating SPC floorboard. The method for preparing themarble tile-imitating SPC floorboard was the same as that of Example 1. In addition, a width of the groove was planed to increase for water contact angle measurements.

A water contact angle refers to a contact angle formed by water droplets on a solid surface and is a commonly used indicator to characterize hydrophilicity or hydrophobicity of a solid surface. Thewater contact angle measurements can be used for quality inspection of material surface coatings and assessment of material surface wettability, and is widely applied in materials science, coating processes, and surface engineering.

Hydrophilicity or hydrophobicity are described as follows. When the contact angleis less than 90°, it indicates that the material surface is hydrophilic, that is, water can easily spread on the material surface. When the contact angle isgreater than 90°, it indicates that the material surface is hydrophobic and water is not easy to spread on its surface.

Corresponding data and results can be seen in Table 1.

**Table 1 Influence of silicone content on water contact angle**

| Content | 0 | 10% | 20% | 30% | 40% |
|---|---|---|---|---|---|
| Epoxy acrylic resin (parts by weight of) | 100 | 90 | 80 | 70 | 60 |
| Silicone monomer (parts by weight of) | 0 | 10 | 20 | 30 | 40 |
| Water contact angle | 52° | 74° | 85° | 95° | 97° |

Referring to Table 1, when the content of the silicone monomer was 30%, there was a highest cost performance. When the content of the silicone monomer increased to 40%, there was little impact on improving the water contact angle.

### Test example 2

According to above embodiments, the marble tile-imitating SPC floorboard was prepared. A position of the groove was planed, and stain resistance comparative tests were performed on the position of the groove and its surrounding area.

Stain resistance comparative tests were performed as follows.
(a) Test samples were placed on in a room-temperature environment.
(b) Surfaces of the test samples were cleaned degreasing cotton. A small amount of contaminant (2-3 drops) was applied onto upper surfaces which was also the position of the groove and its surrounding area of two horizontally placed test samples. One of the two horizontally placed test samples was covered with a glass cover plate.
(c) After 16 h, test samples were was cleaned to remove the contaminant by a clean soft cloth, followed by washing by water. Then the test samples were washed through water containing a wetting agent. The test samples were finally washed through ethyl alcohol, followed by drying through degreasing cotton. For test samples with textured (or embossed) surfaces, the contaminant can be removed by a brush. The washed test samples were place at room temperature for 24 h, followed by placing on an inspection bench, and then were observed from a distance of 400 mm with normal (or corrected-to-normal) vision.

Results were shown as follows.

Influence of test materials on the test samples were measured according to the following standard.
Grade 5:No significant change.
Grade 4: Slight change in gloss and/or color.
Grade 3: Moderate change in gloss and/or color.
Grade 2: Significant change in gloss and/or color.
Grade 1: Surface deformation and/or blistering.

Results were shown in Table 2

**Table 2 Comparison of stain resistance performance of groove**

| Test | Example 1 | Example 2 | Example 3 | Comparative example 1 | Comparative example 2 |
|---|---|---|---|---|---|
| Carbon ink | 4 | 4 | 4 | 1 | 1 |
| Oil-based marker | 3 | 3 | 3 | 1 | 1 |
| Water-based red colored pen | 4 | 4 | 4 | 1 | 1 |
| Soy sauce | 4 | 4 | 4 | 1 | 1 |
| Iodine tincture | 1 | 1 | 1 | 1 | 1 |

Referring to Table 2, the marble tile-imitating SPC floorboard with modified materials has better significant stain resistance performance than that of the comparative examples in grooves.

### Industrial examples

The marble tile-imitating SPC floorboard of the present disclosure has better significant stain resistance performance than that of the comparative examples for general pollutants. The lock-type structure for assembly has wide application environment, can replace some scenarios of marble tiles, such as the following scenarios.
(1) Residential scenarios: living room/bedroom, kitchen/bathroom, and balcony/basement.
(2) Commercial spaces: office/conference room, shopping mall/retail store, and hotel/homestay.
(3) Public facilities: hospital/school and gymnasium/dance studio.

It should be noted that described above are only specific embodiments which are not intended to limit this application. Any modifications, equivalent replacements and improvements can be easily thought by those skilled in the art, shall fall within the scope of this application defined by the appended claims.

## Claims

1. A marble tile-imitating stone plastic composite (SPC) floorboard, comprising:
a wear-resistant layer;
a decoration layer;
a first SPC substrate layer;
a secondSPC substrate layer being a foamed SPC layer; and
a third SPC substrate layer;
**characterized in that** the wear-resistant layer, the decoration layer, the first SPC substrate layer, the secondSPC substrate layer and the third SPC substrate layer are arranged in sequence from top to bottom;
the first SPC substrate layer comprises 12-20 wt.% of a first polyvinyl chloride (PVC) resin, 12-20 wt.% of a first silicone-modified acrylic resin and 50-70 wt.% of calcium carbonate; and
the marble tile-imitating SPC floorboard is provided with a groove configured to recess downward from the wear-resistant layer, and a lowest point of the groove is not lower than a middle point of the first SPC substrate layer along a thickness direction of the first SPC substrate layer; and the groove is configured to imitate a tile grout aesthetic effect.

2. The marble tile-imitating SPC floorboard of claim 1, **characterized in that** the third SPC substrate layer comprises 12-20 wt.% of a second PVC resin, 12-20 wt.% of a second silicone-modified acrylic resin and 50-70 wt.% of calcium carbonate.

3. The marble tile-imitating SPC floorboard of claim 1 or 2, **characterized in that** raw materials ofthe first SPC substrate layer comprises:
20-30 parts by weight of the first PVC resin;
80-110parts by weight of calcium carbonate;
2-4 parts by weight of a first calcium-zinc stabilizer;
2-4parts by weight ofacrylic copolymer (ACR);
2-4parts by weight of a firsttoughening agent;
0.5-3parts by weight of a first internal lubricant;
0.5-3parts by weight ofa first external lubricant;
0.1-0.5parts by weight ofcarbon black; and
20-30parts by weight of the first silicone-modified acrylic resin; and
raw materials ofthe third SPC substrate layer comprises:
20-30 parts by weight of the secondPVC resin;
80-110parts by weight ofcalcium carbonate;
2-4 parts by weight of a second calcium-zinc stabilizer;
2-4parts by weight ofACR;
2-4parts by weight of a secondtoughening agent;
0.5-3parts by weight of a second internal lubricant;
0.5-3parts by weight ofa second external lubricant;
0.1-0.5part by weight ofcarbon black; and
20-30parts by weight of the second silicone-modified acrylic resin.

4. The marble tile-imitating SPC floorboard of any one of claims 1-3, **characterized in that** raw materials of each of the first silicone-modified acrylic resin and the second silicone-modified acrylic resin comprise a silicone monomer and an epoxy acrylic resin;
wherein the silicone monomer accounts for 10%-50% of a total weight of the silicone monomer and the epoxy acrylic resin; and/or
the first silicone-modified acrylic resin and the second silicone-modified acrylic resin each has a viscosity of 1000-2000 mPa·s.

5. The marble tile-imitating SPC floorboard of claim 1, **characterized in that** the decoration layer has a wood texture, a marble texture, a granite texture, a cloth texture, a carpet texture, a cement texture, a metal texture or a combination thereof.

6. The marble tile-imitating SPC floorboard of claim 1, **characterized in that** raw materials of the secondSPC substrate layer comprises:
40-60 parts by weight of a third PVC resin;
70-100parts by weight of calcium carbonate;
30-60 parts by weight of a foaming recycled material;
3-5 parts by weight of a calcium-zinc stabilizer;
1-3 parts by weight of ACR;
5-10 parts by weight of a foamingregulator;
0.1-0.5 part by weight of a yellow foaming agent;
0.1-0.3part by weight of awhite foaming agent;
0.5-3parts by weight of an internal lubricant; and
0.5-3 parts by weight of an external lubricant.

7. The marble tile-imitating SPC floorboard of claim 1, **characterized in that** an ultraviolet (UV) curable coating layer is provided above the wear-resistant layer; and/or
a sound-absorbing layer is provided below the third SPC substrate layer.

8. The marble tile-imitating SPC floorboard of any one of claims 1-3, **characterized in that** a thickness of the first SPC substrate layer is 0.8-1.2 mm; a thickness of the second SPC substrate layer is 3.2-12.0 mm; and a thickness of the third SPC substrate layer is 0.8-1.2 mm; and/or
the first SPC substrate layer, the second SPC substrate layerand the third SPC substrate layer are prepared through co-extrusion.

9. The marble tile-imitating SPC floorboard of any one of claims 1-4, **characterized in that** the groove is formed through planing.

10. A method for preparing a marble tile-imitating stone plastic composite (SPC) floorboard, comprising:
(S1) mixing raw materials ofa first SPC substrate layer under heating to produce a first mixture, mixing raw materials of a second SPC substrate layer under heating to produce a second mixture, and mixing raw materials of a third SPC substrate layer under heating to produce a third mixture, wherein the second SPC substrate layer is a foamed SPC substrate layer;
(S2) transferring the first mixture, the second mixture and the third mixture to an extruder, respectively;
(S3) injecting the second mixture to a mold through a center flow channel of a merging core; injecting the first mixture to the mold through a first side flow channel of the merging core, and injecting the third mixture to the mold through a second side flow channel of the merging core; and performing, by a distributor, co-extrusion to produce a three-layer crude plate, wherein a top layer of the three-layer crude plate is the first SPC substrate layer, a middle layer of the three-layer crude plate is the second SPC substrate layer, and a bottom layer of the three-layer crude plate is the third SPC substrate layer;
(S4) forming a decoration layer on the first SPC substrate layer; and forming a wear-resistant layer on the decoration layer;
(S5) coating an ultraviolet (UV) curable transparent coating on the wear-resistant layer to form a UV curable coating layer, so as to produce a crude SPC floorboard;
(S6) patterning an upper surface of the crude SPC floorboard through a plate roller; and
(S7) subjecting the crude SPC floorboard to planing to form a groove with a tile grout aesthetic effect, so as to produce the marble tile-imitating SPC floorboard, wherein the planing is performed on the UV layer, the wear-resistant layer, the decoration layer and a part of the first SPC substrate layer, and a lowest point of the groove is not lower than a middle point of the first SPC substrate layer along a thickness direction of the first SPC substrate layer.
